# FASCICULE DE BREVET EUROPEEN

(11) **EP 2 859 824 B1**
(45) Date de publication et mention de la délivrance du brevet: **20.03.2019**
(21) Numéro de dépôt: 14185980.1
(22) Date de dépôt: 23.09.2014
(51) Int. Cl.: A47J 43/046, A47J 43/07, A47J 43/08

(54) **Accessoire pour découper des aliments en morceaux**
Zubehörteil zum Schneiden von Lebensmitteln in Stücke
Accessory for cutting food into pieces

(30) Priorité: 23.09.2013 FR 1359129
(43) Date de publication de la demande: 15.04.2015
(73) Titulaire: SEB S.A., 69130 Ecully (FR)
(72) Inventeur: Volatier, Sébastien, 21000 Dijon (FR); Charles, Patrick, 65290 Louey (FR); Astegno, Jean-Paul, 64420 Espoey (FR); Lacourpaille, Gérard, 65380 Ossun (FR); Bessonnet, Dominique, 64420 Artigueloutan (FR)
(74) Mandataire: Bourrières, Patrice

(56) Documents cités:
- DE-A1-102008 040 937
- FR-A1- 2 872 399
- US-A1- 2004 060 414

## Description

La présente invention concerne le domaine technique des appareils ménagers motorisés utilisés pour découper des aliments, notamment en tranches, en filaments ou en cubes, par un mouvement de rotation d'un outil de coupe. Dans une application préférée, l'invention se rapporte à un accessoire de découpe d'aliments destiné à être adapté de manière amovible sur un boîtier d'entraînement motorisé.

Un document DE202012103202 a proposé un accessoire de découpe d'aliments en cubes comprenant un bol sur lequel est adaptée une platine amovible définissant une chambre de travail dont le fond comprend une fenêtre de coupe s'ouvrant directement dans le bol. La chambre de travail reçoit un outil rotatif tandis que la fenêtre de coupe reçoit une grille de découpe amovible. L'accessoire comprend aussi un couvercle amovible qui est adapté sur la platine amovible de manière à fermer la chambre de travail et qui comprend une trémie d'introduction des aliments située en regard de la fenêtre de coupe. Le couvercle comprend en outre un système d'entraînement d'outil de coupe rotatif destiné à être accouplé avec un bloc moteur amovible conçu pour permettre, par ailleurs, l'entraînement d'un pied de mixage en étant tenu à la main.

Un tel système permet effectivement la découpe d'aliments en cubes mais présente un certain nombre d'inconvénients dus à sa conception. Tout d'abord, la mise en oeuvre d'un bol ne permet pas la découpe de grandes quantités d'aliments. Ensuite, l'usage d'un bloc moteur amovible conçu pour être porté à la main lors de son utilisation avec un pied de mixage ne permet pas de disposer d'une puissance suffisante pour découper en cubes des aliments durs tels que les carottes. Par ailleurs, ce système utilise un élément de verrouillage pour interdire le démontage du couvercle en place sur le bol lorsque le bloc moteur est monté sur le couvercle. Une telle réalisation apparaît sûre, mais avec une construction sophistiquée adaptée à un boîtier motorisé particulier.

Le document DE102008040937 divulgue un accessoire de découpe d'aliments selon le préambule de la revendication 1.

Il est donc apparu le besoin d'un accessoire de découpe d'aliments en morceaux qui offre une bonne sécurité d'usage, avec une construction plus simple facilitant notamment l'utilisation de différents boîtiers motorisés et/ou autorisant la découpe de grandes quantités d'aliments de façon aisée.

Afin d'atteindre cet objectif, l'invention concerne un accessoire de découpe d'aliments destiné à être adapté sur un boîtier d'entraînement motorisé et/ou sur un adaptateur. Selon l'invention, cet accessoire de découpe d'aliments comprend :
- une platine qui comprend un fond pourvu d'un siège de réception d'un outil de coupe primaire mobile en rotation selon un axe de rotation, la platine délimitant en partie une chambre de travail ouverte à l'opposé du fond, la platine comprenant un conduit d'évacuation des aliments découpés s'étendant à l'extérieur de la chambre de travail,
- un couvercle adapté pour fermer en partie au moins la chambre de travail, le couvercle comprenant une goulotte d'introduction des aliments à découper,
- une embase d'adaptation sur le boîtier d'entraînement motorisé et/ou sur l'adaptateur,
- des moyens d'entraînement en rotation de l'outil de coupe primaire qui comprennent :
   - au niveau de l'embase, un pied d'entraînement adapté pour coopérer avec un arbre de sortie du boîtier d'entraînement motorisé et/ou avec une tête de transmission de l'adaptateur,
   - une tête d'entraînement liée en rotation au pied d'entraînement et accessible à partir de la chambre de travail,
   - une douille d'entraînement portée par le couvercle et adaptée pour lier en rotation la tête d'entraînement et l'outil de coupe primaire.
Un tel accessoire de découpe d'aliments selon l'invention permet de découper une grande quantité d'aliments dans la mesure où cette quantité n'est pas limitée par un bol de réception fermé solidaire de l'accessoire. De plus, la conception des moyens d'entraînement est telle que l'outil de coupe primaire ne peut être entrainé en rotation si l'ensemble des composants de l'accessoire de découpe d'aliments n'est pas assemblé. Par ailleurs, la mise en oeuvre de l'accessoire de découpe d'aliments avec un boîtier d'entraînement motorisé adapté pour être posé sur un support, tout en assurant la stabilité de l'ensemble qu'il forme avec l'accessoire, permet de disposer d'une grande puissance de coupe et donc de découper plus facilement des aliments durs tels que notamment des carottes ou des pommes de terre.

Selon une forme de réalisation avantageuse permettant de recouper les morceaux d'aliments découpés par l'outil de coupe primaire,
- le fond de la platine est pourvu d'une fenêtre de coupe,
- la goulotte d'introduction des aliments à découper est située sensiblement en regard de la fenêtre de coupe,
- le conduit d'évacuation des aliments découpés est raccordé à la fenêtre de coupe,
- un outil de coupe secondaire fixe est disposé dans la fenêtre de coupe,
- l'outil de coupe secondaire comprend au moins un organe de coupe qui est situé en regard de la goulotte et qui possède au moins une arrête de coupe orientée vers la goulotte,
- et l'outil de coupe primaire rotatif comprend au moins :
   - une arrête de coupe principale qui est située dans un plan de coupe sensiblement perpendiculaire à l'axe de rotation,
   - et un biseau presseur qui est issu de l'arrête de coupe principale, qui est agencé du côté de l'outil de coupe secondaire, et qui est incliné à partir de l'arrête de coupe principale dans une direction opposée au sens de rotation de l'outil de coupe primaire, de manière à presser les aliments tranchés contre l'outil de coupe secondaire.

Alors, selon une forme de réalisation préférée, l'outil de coupe secondaire est monté amovible dans la fenêtre de coupe. L'accessoire de découpe d'aliments peut ainsi comporter plusieurs outils de coupe secondaire interchangeables.

Selon une caractéristique de l'invention, l'outil de coupe secondaire comprend une première série d'organes de coupe sensiblement parallèles entre eux. Cette disposition permet notamment d'obtenir des bâtonnets ou des morceaux présentant une section carrée ou rectangulaire.

Selon une variante de cette caractéristique, l'outil de coupe secondaire fixe comprend une deuxième série d'organes de coupe sensiblement parallèles entre eux, la deuxième série d'organes de coupe définissant, avec la première série d'organes de coupe, une grille de découpe. Une telle disposition permet notamment d'obtenir des cubes ou des parallélépipèdes rectangles.

Selon une forme de réalisation avantageuse, le couvercle est mobile sur la platine entre une position déverrouillée dans laquelle le couvercle peut être retiré de la platine et une position verrouillée. Cette disposition permet d'obtenir un couvercle amovible.

Selon un mode de réalisation, l'embase est portée par la platine.

Selon un autre mode de réalisation, l'accessoire de découpe d'aliments comprend un carter qui est situé sous la platine, qui porte l'embase et qui comporte une tête d'accouplement liée en rotation avec le pied d'entraînement, la tête d'accouplement coopérant avec un pied d'accouplement porté par l'arbre d'entraînement lorsque la platine est montée sur le carter. La mise en oeuvre d'un tel carter permet de conférer à l'accessoire une meilleure esthétique tout en facilitant sa fabrication. De plus, la mise en oeuvre du pied d'accouplement et de la tête d'accouplement évite que l'outil de coupe primaire puisse être entrainé alors que le carter et la platine ne sont pas assemblés.

Selon une autre caractéristique de ce mode de réalisation, le carter comprend une fenêtre de passage du conduit. Le carter peut également comprendre une échancrure latérale pour le passage du conduit.

Selon encore une autre caractéristique de ce mode de réalisation, le carter comprend des moyens de verrouillage qui coopèrent avec le couvercle en position verrouillée pour lier le couvercle au carter. Ainsi, la platine se trouve parfaitement immobilisée entre le couvercle et le carter.

Selon une variante de cette caractéristique, les moyens de verrouillage sont du type à baïonnette. Le couvercle est ainsi verrouillé par baïonnette avec le carter. Une telle construction présente une réalisation simple et une manipulation aisée. A titre de variante, le couvercle peut notamment être assemblé avec le carter par vissage, par une bride ou par un crochet.

Avantageusement alors, des languettes issues du couvercle sont engagées sous des pattes de verrouillage issues du carter lorsque le couvercle est verrouillé avec le carter. Cette disposition permet de simplifier la construction en limitant les épaisseurs de parois.

Avantageusement alors, les languettes sont extérieures, et les pattes de verrouillage sont intérieures. Cette disposition permet de limiter l'encombrement de l'accessoire de découpe d'aliments.

Avantageusement alors, la platine comporte une bordure supérieure s'étendant au dessus des pattes de verrouillage lorsque la platine est en place sur le carter, des fenêtres d'introduction ménagées dans la bordure supérieure pour le passage des languettes, ainsi que des fenêtres de verrouillage prolongeant les fenêtres d'introduction, les languettes étant engagées dans les fenêtres de verrouillage lorsque le couvercle est verrouillé avec le carter. Cette disposition permet de faciliter la mise en place de la platine sur le carter.

Selon une caractéristique de l'invention, le conduit s'étend selon un axe longitudinal qui forme un angle aigu non nul avec l'axe de rotation. Une telle configuration permet d'éloigner l'extrémité libre du conduit de l'axe de rotation de manière à faciliter le placement d'un récipient destiné à recueillir les aliments découpés sous l'extrémité libre du conduit.

Selon une variante de cette caractéristique, l'angle aigu présente une valeur comprise entre 20° et 50°.

Selon une autre caractéristique de l'invention, le conduit présente une extrémité libre distante d'une longueur supérieure ou égale à 100 mm à partir de la fenêtre de coupe. Une telle hauteur de conduit permet de rendre l'accès par le conduit à la fenêtre de coupe difficile afin de réduire les risques de blessures.

Selon une autre caractéristique de l'invention, le conduit possède une section dont la moyenne des dimensions maximale et minimale est au plus égale à 65,5 mm, et/ou dont la dimension maximale est au plus égale à 76 mm. Une telle dimension vise également à réduire les risques de blessure lors de l'usage de l'accessoire.

Selon une autre caractéristique de l'invention, le conduit possède une section décroissante depuis la fenêtre de coupe jusqu'à son extrémité libre.

Selon une autre caractéristique de l'invention, la goulotte s'étend selon une direction longitudinale sensiblement parallèle à l'axe de rotation.

L'invention concerne également un ensemble de découpe d'aliments, comportant un accessoire de découpe d'aliments du type précité ainsi qu'un adaptateur amovible comprenant :
- d'une part, des moyens de réception de l'embase et un pied d'adaptation sur un boîtier d'entraînement motorisé,
- et, d'autre part, une tête de transmission adaptée pour coopérer avec le pied d'entraînement de l'embase et un pied de transmission adapté pour coopérer avec l'arbre de sortie du boîtier d'entraînement motorisé, la tête de transmission étant entraînée par le pied de transmission.
La mise en oeuvre d'un tel adaptateur amovible permet d'adapter un même accessoire de découpe d'aliments sur différents boîtiers motorisés.

Alors, selon une forme de réalisation avantageuse, l'adaptateur comprend un bloc de renvoi d'angle comprenant au moins un train d'engrenage assurant un renvoi d'angle entre la tête de transmission et le pied de transmission. Cette disposition permet, par exemple, d'utiliser un accessoire de découpe d'aliments comportant une embase inférieure et un axe de rotation vertical avec un boîtier motorisé comportant une sortie d'entraînement latérale.

Ces objets sont atteints également avec un appareil électroménager de préparation culinaire, comportant un boîtier d'entraînement motorisé, si désiré un adaptateur amovible monté sur le boîtier d'entraînement motorisé, et un accessoire de découpe d'aliments amovible monté sur le boîtier d'entraînement motorisé et/ou sur l'adaptateur, du fait que l'accessoire de découpe d'aliments est conforme à l'une au moins des caractéristiques précitées.

Bien entendu, les différentes caractéristiques, variantes, formes et modes de réalisation de l'invention peuvent être associés les uns avec les autres selon diverses combinaisons dans la mesure où ils ne sont pas incompatibles ou exclusifs les uns des autres.

Par ailleurs, diverses autres caractéristiques de l'invention ressortent de la description annexée, effectuée en référence aux dessins qui illustrent des formes non limitatives de réalisation d'un accessoire de découpe d'aliments conforme à l'invention.
- La figure 1 est une coupe axiale schématique d'un accessoire de découpe d'aliments selon l'invention adapté sur un boîtier d'entraînement motorisé à arbre de sortie vertical.
- La figure 2 est une perspective schématique éclatée de l'accessoire de découpe d'aliments représenté à la figure 1.
- La figure 3 est une coupe axiale schématique à plus grande échelle de l'accessoire de découpe d'aliments représenté aux figures 1 et 2.
- La figure 4 est une perspective schématique d'un outil de coupe primaire constitutif de l'accessoire de découpe d'aliments illustré aux figures 1 à 3.
- La figure 5 est une coupe schématique selon le plan V-V de la figure 4.
- La figure 6 est une perspective schématique d'un outil de coupe secondaire constitutif de l'accessoire de découpe d'aliments illustré aux figures 1 à 3.
- La figure 7 est une perspective schématique d'un couvercle constitutif de l'accessoire de découpe d'aliments illustré aux figures 1 à 3.
- La figure 8 et une coupe axiale du couvercle représenté à la figure 7.
- La figure 9 est une perspective schématique d'un carter constitutif de l'accessoire de découpe d'aliments illustré aux figures 1 à 3.
- La figure 10 est une coupe axiale du carter représenté à la figure 9.
- La figure 11 est une coupe axiale d'une platine constitutive de l'accessoire de découpe d'aliments illustré aux figures 1 à 3.
- La figure 12 est une coupe axiale schématique d'un accessoire de découpe d'aliments selon l'invention adapté sur un adaptateur monté sur un boîtier d'entraînement motorisé à arbre de sortie horizontal,
- La figure 13 est une coupe axiale schématique analogue à la figure 3 montrant une autre forme de réalisation d'un accessoire de découpe d'aliments selon l'invention.

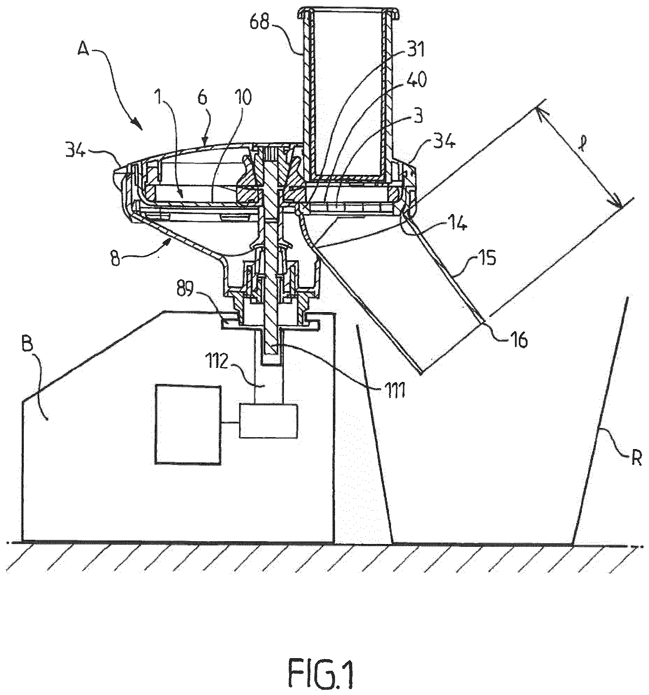

Un accessoire de découpe d'aliments selon l'invention, tel qu'illustré figure 1 et désigné dans son ensemble par la référence A, est destiné à être adapté de manière amovible sur un boîtier d'entraînement motorisé B.

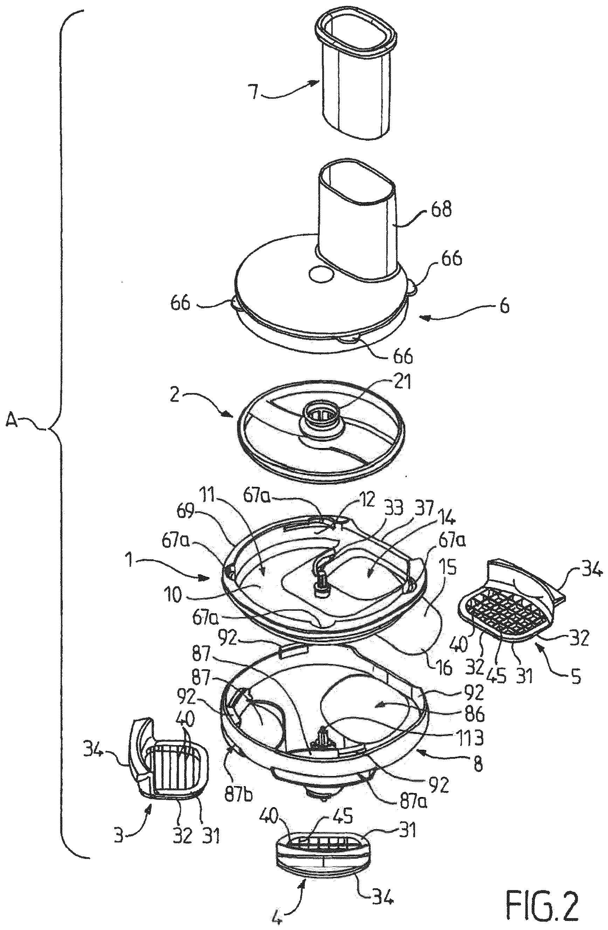

Selon l'exemple illustré et comme cela ressort de la figure 2, l'accessoire de découpe d'aliments A résulte du montage de huit composants principaux, à savoir :
- une platine 1,
- un outil de coupe primaire 2 rotatif,
- trois outils de coupe secondaire 3, 4, 5 fixes interchangeables,
- un couvercle 6,
- un poussoir 7,
- un carter 8,
chaque composant principal pouvant résulter de l'assemblage de différents éléments et les huit composants principaux pouvant en outre être séparés de manière à permettre un nettoyage aisé de l'accessoire de découpe d'aliments.

La platine 1 comprend un fond 10 qui forme un siège de réception 11 pour l'outil de coupe primaire 2 et qui est entouré par un rebord périphérique 12. La platine 1 délimite ainsi en partie une chambre de travail 13. Dans l'exemple de réalisation illustré aux figures, la chambre de travail 13 possède avantageusement une forme générale sensiblement cylindrique de révolution selon un axe de rotation Δ. Comme cela apparaîtra par la suite, l'outil de coupe primaire 2 est mobile en rotation dans la chambre de travail 13 selon l'axe de rotation Δ sensiblement perpendiculaire au fond 10. Par ailleurs, le fond 10 de la platine 1 est pourvu d'une fenêtre de coupe 14 destinée à recevoir l'un ou l'autre des trois outils de coupe secondaire 3, 4, 5.

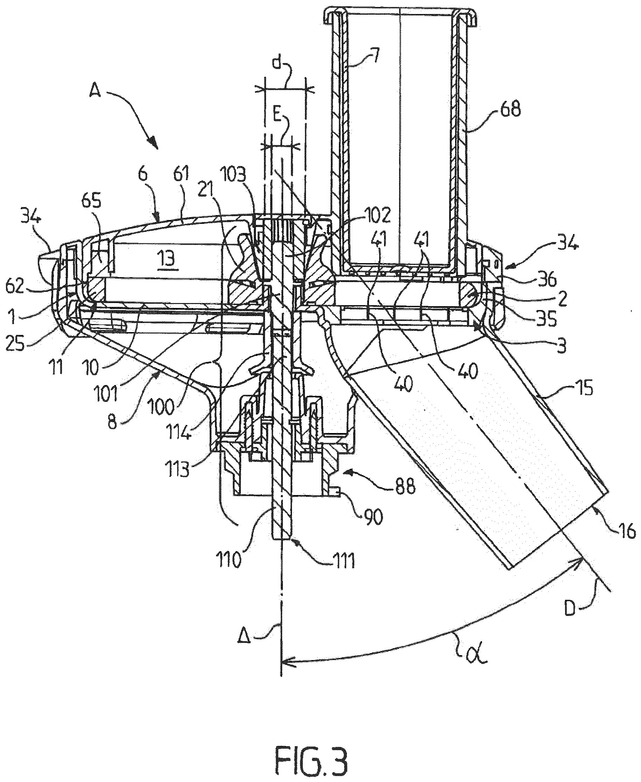

La platine 1 comprend un conduit 15 d'évacuation des aliments découpés qui est raccordé à la fenêtre de coupe 14 et qui s'étend à l'extérieur de la chambre de travail 13. Selon l'exemple illustré, le conduit 15 possède une extrémité sensiblement droite qui s'étend selon un axe longitudinal D formant, avec l'axe de rotation Δ, un angle aigu α compris entre 20° et 50°, visible à la figure 3, de manière à faciliter la mise en place d'un récipient R sous l'extrémité libre 16 du conduit 15. De manière préférée, le conduit 15 présente une extrémité libre 16 distante d'une longueur l supérieure ou égale à 100 mm à partir de la fenêtre de coupe 14. De même, le conduit 15 possède une section dont la moyenne des dimensions maximale et minimale est au plus égale à 65,5 mm, et/ou dont la dimension maximale est au plus égale à 76 mm. De plus, dans le cas présent, le conduit 15 possède une section décroissante depuis la fenêtre de coupe 14 jusqu'à son extrémité libre 16.

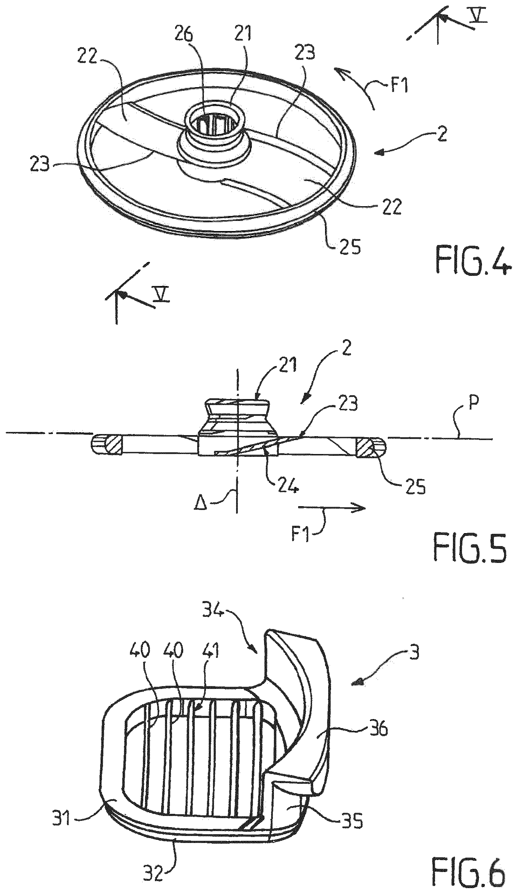

L'outil de coupe primaire 2, illustré seul aux figures 4 et 5, comprend un moyeu d'entraînement 21 à partir duquel s'étendent deux lames 22 qui comprennent chacune une arrête de coupe principale 23 située dans un plan de coupe P sensiblement perpendiculaire à l'axe de rotation Δ. Chaque lame 22 comprend en outre un biseau presseur 24 qui est issu de l'arrête de coupe principale 23 et incliné dans une direction opposée au sens de rotation de l'outil de coupe primaire 2 tel qu'indiqué par la flèche F1. L'outil de coupe primaire 2 comprend également un anneau périphérique 25 qui est destiné à venir en appui contre le siège de réception 11 formé par le bord périphérique extérieur du fond 10. Le moyeu d'entraînement 21 comprend en outre une fenêtre d'entraînement 26 dont la fonction apparaîtra par la suite.

Chaque outil de coupe secondaire 3, 4, 5 comprend un châssis 31 qui possède une forme extérieure complémentaire de celle de la périphérie de la fenêtre de coupe 14. Le châssis 31 présente ici une forme générale sensiblement rectangulaire à coins arrondis et comprend trois butées latérales 32 chacune située sur un côté du châssis 31 et destinées à venir en appui dans trois logements 33 aménagés à la périphérie de la fenêtre de coupe 14. Le châssis 31 comprend en outre un organe de préhension 34 en L dont une première branche 35 s'étend verticalement à partir d'un côté du châssis 31 de manière à longer le rebord périphérique 12. La première branche 35 présente alors une forme complémentaire de celle du rebord périphérique 12. La première branche 35 se trouve prolongée par une deuxième branche 36 qui s'étend latéralement à partir de la première branche 35 vers l'extérieur de la platine 1 de manière à venir en appui dans une échancrure 37 aménagée dans le rebord périphérique 12. La deuxième branche 36 s'étend alors à l'extérieur de la chambre de travail 13. Ainsi, l'organe de préhension 34, qui s'étend en partie latéralement à l'extérieur de la chambre de travail 13, permet de retirer facilement l'outil de coupe secondaire correspondant hors de la fenêtre de coupe 14 par un mouvement de translation sensiblement parallèle à l'axe de rotation Δ de l'outil de coupe primaire 2.

Les outils de coupe secondaire 3, 4, 5 sont interchangeables. Selon l'exemple illustré, le premier outil de coupe secondaire 3 comprend une première série d'organes de coupe 40 sensiblement parallèles entre eux. Chaque organe de coupe 40 de la première série s'étend selon un axe sensiblement parallèle à l'axe de rotation Δ et possède une arrête de coupe 41 orientée vers le haut. Ainsi le premier outil de coupe secondaire 3 permet de réaliser lorsqu'il est utilisé avec l'outil de coupe primaire 2 une découpe d'aliments en bâtonnets.

Toujours selon l'exemple illustré, les deuxième et troisième outils de coupe secondaire 4 et 5 comprennent en outre chacun une deuxième série d'organes de coupe 45 sensiblement parallèles entre eux qui définissent avec la première série d'organes de coupe 40 une grille de découpe. Ainsi, les deuxième et troisième outils de coupe secondaire 4 et 5 permettent de réaliser des découpes en cubes lorsqu'ils sont utilisés avec l'outil de coupe primaire 2.

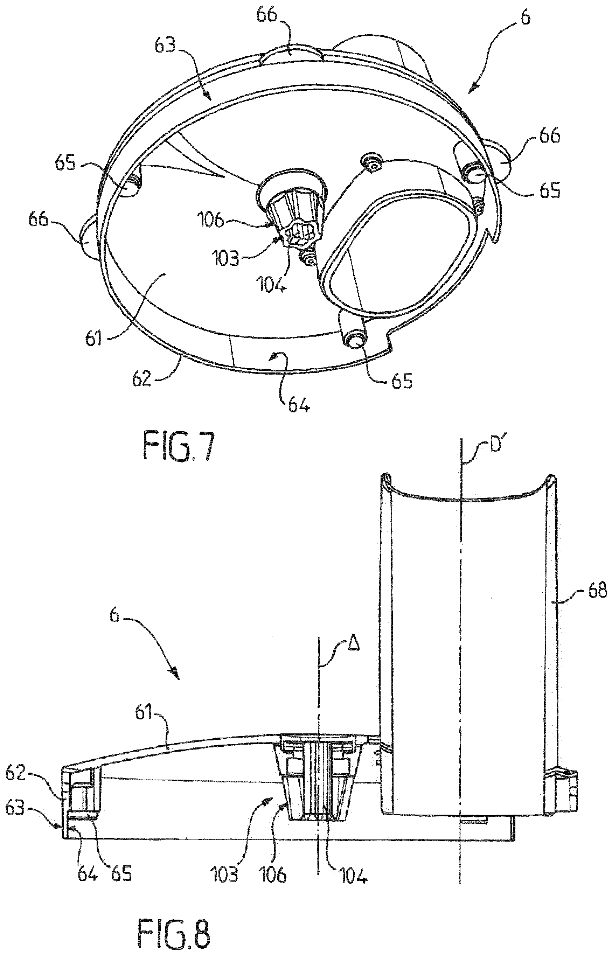

Le couvercle 6, illustré seul aux figures 7 et 8, est destiné à être adapté de manière amovible sur la platine 1 pour fermer en partie au moins la chambre de travail 13. À cet effet, le couvercle 6 comprend un toit 61 qui est bordé sur sa face inférieure par une jupe périphérique 62 qui possède une face extérieure 63 sensiblement cylindrique de révolution selon l'axe de rotation Δ et de forme complémentaire à celle du rebord périphérique 12. Lors de la mise en place du couvercle 6 dans la platine 1, la jupe périphérique 62 est destinée à venir à s'insérer, au niveau de sa partie basse, entre l'anneau périphérique 25 et le rebord périphérique 12 de manière à centrer l'outil de coupe primaire 2. Ainsi, la jupe périphérique 62 possède une face inférieure 64 également sensiblement cylindrique de révolution selon l'axe de rotation Δ. Afin d'éviter que l'outil de coupe primaire 2 ne se soulève lorsqu'il travaille, le couvercle 6 comprend également trois pions 65 destinés à venir en appui sur le dessus de l'anneau périphérique 25.

Le couvercle 6 est mobile sur ou dans la platine 1 entre une position déverrouillée dans laquelle il peut être retiré de la platine 1 selon un mouvement de translation parallèle à l'axe de rotation Δ et une position verrouillée plus particulièrement illustrée à la figure 3 dans laquelle il ne peut pas être désolidarisé de la platine 1. Afin de permettre cette immobilisation du couvercle 6 sur la platine 1, il est mis en oeuvre un système de verrouillage à baïonnette qui comprend quatre languettes 66 portées par la face extérieure 63 de la jupe périphérique 62 et destinées à venir s'engager dans quatre fenêtres d'introduction 67a de la platine 1.

Le couvercle 6 comprend en outre une goulotte 68 d'introduction des aliments à découper. La goulotte 68 s'étend selon une direction longitudinale D' sensiblement parallèle à l'axe de rotation Δ de manière à se trouver en regard de la fenêtre de coupe 14 lorsque le couvercle 6 est en position verrouillée comme le montre la figure 3. Il est à noter que dans le cas présent l'extrémité inférieure de la goulotte 68 s'étend en dessous du toit 61 de manière à guider les aliments à découper au plus près de la fenêtre de coupe 14 tout en laissant un passage pour les lames 22 de l'outil de coupe primaire 2.

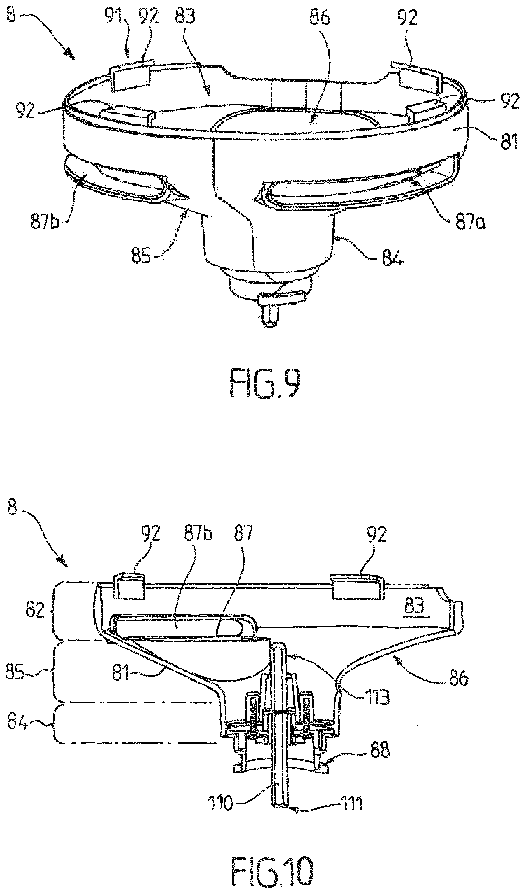

Le carter 8 est situé sous la platine 1. Le carter 8 est destiné à venir s'emboîter sous la platine 1 de manière à améliorer l'esthétique de cette dernière. Ainsi le carter 8 porte la platine 1. Comme le montrent plus particulièrement les figures 9 et 10, le carter 8 comprend une coque 81 qui présente une forme générale d'entonnoir dont la partie supérieure, de forme générale cylindrique, définit une chambre 83 de réception de la platine 1. La coque 81 comprend un tronc 84 de forme générale cylindrique de révolution qui est relié à une partie supérieure 82 par une partie intermédiaire 85 de forme générale tronconique. Afin de permettre l'emboitement de la platine 1 dans le carter 8, la partie intermédiaire 85 comprend une fenêtre 86 pour le passage du conduit 15. Ainsi le conduit 15 s'étend à l'extérieur du carter 8.

Le carter 8 définit avec la platine 1 des logements de rangement 87 pour les outils de coupe secondaire 3, 4, 5 à l'extérieur de la chambre de travail 13. En d'autres termes, les logements de rangement 87 sont ménagés du côté de la platine 1 opposé au siège de réception 11 de l'outil de coupe primaire 2. A cet effet le carter 8 comprend également dans sa partie intermédiaire 85 deux ouvertures latérales 87a, 87b pour la mise en place d'un des outils de coupe secondaire 3, 4, 5 dans l'un des logements de rangement 87. Par ailleurs, l'organe de préhension 34 des outils de coupe secondaire 3, 4, 5 disposés dans les logements de rangement 87 s'étend à l'extérieur de l'ouverture latérale 87a, 87b.

Le tronc 84 porte, à l'opposé de la chambre 83, une embase 88 d'adaptation sur le boîtier d'entraînement motorisé B qui comprend à cet effet un logement d'adaptation 89 dans lequel l'embase 88 est immobilisée par un système de verrouillage à baïonnette 90.

Le carter 8 comprend aussi des moyens de verrouillage 91 qui coopèrent avec le couvercle 6 lorsque ce dernier est en position verrouillée. Dans l'exemple de réalisation illustré sur les figures, les moyens de verrouillage 91 sont du type à baïonnette et comprennent, dans le cas présent, quatre pattes de verrouillage 92 sous lesquelles les languettes 66 du couvercle 6 viennent se placer en position verrouillée de ce dernier. Ainsi, la platine 1 se trouve parfaitement immobilisée entre le couvercle 6 et le carter 8. Le couvercle 6 en position verrouillée vient en prise avec le carter 8. Le couvercle 6 est verrouillé par baïonnette avec le carter 8.

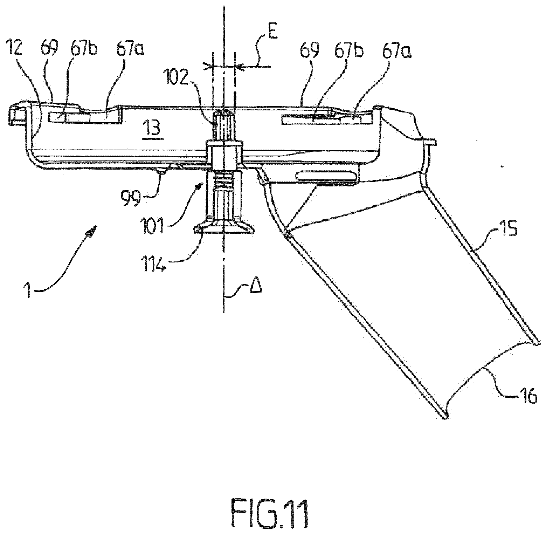

Plus particulièrement dans l'exemple de réalisation illustré aux figures, les languettes 66 issues du couvercle 6 sont engagées sous les pattes de verrouillage 92 issues du carter 8 lorsque le couvercle 6 est verrouillé avec le carter 8. Tel que bien visible sur la figure 7, les languettes 66 issues du couvercle 6 sont extérieures. Tel que bien visible sur la figure 9, les pattes de verrouillage 92 issues du carter 8 sont intérieures. Par ailleurs, tel que bien visible sur la figure 11, la platine 1 comporte une bordure supérieure 69. Les fenêtres d'introduction 67a sont ménagées dans la bordure supérieure 69 pour le passage des languettes 66 du couvercle 6. Des fenêtres de verrouillage 67b prolongent les fenêtres d'introduction 67a. La bordure supérieure 69 s'étend au dessus des pattes de verrouillage 92 lorsque la platine 1 est en place sur le carter. Les languettes 66 sont engagées dans les fenêtres de verrouillage 67b lorsque le couvercle 6 est verrouillé avec le carter 8. Les pattes de verrouillage 92 sont disposées derrière les fenêtres de verrouillage 67b lorsque le couvercle 6 est verrouillé avec le carter 8. Ainsi le couvercle 6 verrouillé avec le carter 8 est aussi verrouillé avec la platine 1. Pour retenir les outils de coupe secondaire 3, 4, 5 disposés dans les logements de rangement 87 lorsque le couvercle 6 est en position verrouillée, la platine 1 comporte des butées 99 disposées sous le fond 10. Les butées coopèrent par exemple avec les organes de coupe 40, 45 et/ou le châssis 31.

L'accessoire de découpe d'aliments A selon l'invention comprend également des moyens d'entraînement 100 de l'outil de coupe primaire 2 en rotation dans la chambre de travail 13.

Selon l'exemple illustré, les moyens d'entraînement 100 comprennent un arbre d'entraînement 101 selon l'axe de rotation Δ qui est solidaire de la platine 1 en étant lié en translation à cette dernière et libre en rotation selon l'axe de rotation Δ par rapport à celle-ci.

Comme le montre notamment la figure 11, l'arbre d'entraînement 101 possède une tête d'entraînement 102 qui s'étend dans la chambre de travail 13. La tête d'entraînement 102 présente en section droite transversale une plus grande dimension E qui est strictement inférieure à la plus petite dimension d de la fenêtre d'entraînement 26 du moyeu d'entraînement 21. Ainsi l'arbre d'entraînement 101 ne peut entraîner directement l'outil de coupe primaire 2. Dans le cas présent la tête d'entraînement 102 possède une forme cannelée.

Afin d'assurer une liaison en rotation du moyeu d'entraînement 21 et de l'arbre d'entraînement 101, les moyens d'entraînement 100 comprennent en outre une douille d'entraînement 103 qui est portée par le couvercle 6 en étant liée en translation à ce dernier et libre en rotation selon l'axe de rotation Δ par rapport à celui-ci.

La douille d'entraînement 103 est adaptée pour lier en rotation la tête d'entraînement 102 et l'outil de coupe primaire 2 lorsque le couvercle 6 est placé sur ou dans la platine 1. À cet effet, la douille d'entraînement 103 comprend un alésage axial d'entraînement 104 qui possède une forme complémentaire de celle de la tête d'entraînement 102. La douille d'entraînement 103 présente une forme extérieure 106 complémentaire de celle de la fenêtre d'entraînement 26. Dans le cas présent, la fenêtre d'entraînement 26 possède une forme cannelée qui converge vers le fond 10 de la platine 1. Les formes générales tronconiques, de la fenêtre d'entraînement 26 et de la forme extérieure 106 de la douille d'entraînement 103, imposent le sens de montage de l'outil de coupe primaire 2 dans la mesure où la douille d'entraînement 103 ne peut s'engager en translation axiale selon la direction de l'axe de rotation Δ sur la tête d'entraînement 102 et dans la fenêtre d'entraînement 26 que si la plus grande section de passage de la fenêtre d'entraînement 26 est orientée vers le haut.

Les moyens d'entraînement 100 comprennent en outre un arbre intermédiaire 110 d'axe de rotation Δ qui est solidaire du carter 8 en étant lié en translation à ce dernier et libre en rotation selon l'axe de rotation Δ par rapport à celui-ci. L'arbre intermédiaire 110 comprend un pied d'entraînement 111 qui s'étend à l'extérieur de l'embase 88 et qui est destiné à coopérer avec un arbre de sortie 112 du boîtier d'entraînement motorisé B, comme le montre la figure 1. L'arbre intermédiaire 110 comprend, à l'opposé du pied d'entraînement 111, une tête d'accouplement 113 qui est située à l'intérieur du carter 8 et qui est destinée à coopérer avec un pied d'accouplement 114 porté par l'arbre d'entraînement 101.

Les différents composants principaux constitutifs décrits ci-dessus sont assemblés de la manière suivante pour former l'accessoire de découpe d'aliments A selon l'invention.

Tout d'abord, la platine 1 est emboîtée dans le carter 8, le conduit 15 étant engagé dans la fenêtre 86 et le pied d'accouplement 114 venant s'engager en translation selon l'axe de rotation Δ sur la tête d'accouplement 113. Ainsi, après cet emboîtement la tête d'entraînement 102 et le pied d'entraînement 111 se trouvent liés en rotation. Le sous-ensemble ainsi formé peut être placé sur le boîtier d'entraînement motorisé B, le pied d'entraînement 111 venant s'emboîter dans l'arbre de sortie 112 tandis que l'embase 88 est verrouillée dans le logement d'adaptation 89 dudit boîtier d'entraînement motorisé B.

Ensuite, l'un des outils de coupe secondaire 3, 4, 5 fixe est disposé dans la fenêtre de coupe 14, selon un mouvement de translation sensiblement parallèle à l'axe de rotation Δ tandis que les deux autres outils de coupe secondaire sont chacun placés dans l'un des logements de rangement 87.

L'outil de coupe primaire 2 peut alors être placé dans la chambre de travail 13, la fenêtre d'entraînement 26 étant centrée sur la tête d'entraînement 102. Le montage de l'accessoire de découpe d'aliments A est achevé en plaçant le couvercle 6 sur la platine 1, la jupe périphérique 62 venant entre l'anneau périphérique 25 et le rebord périphérique 12 tandis que la douille d'entraînement 103 s'engage dans la fenêtre d'entraînement 26 et sur la tête d'entraînement 102. Le verrouillage du couvercle 6 est assuré par un mouvement de rotation selon l'axe de rotation Δ de manière à venir placer les languettes 66 sous les pattes de verrouillage 92.

L'accessoire de découpe d'aliments A peut alors être utilisé pour assurer la découpe d'aliments.

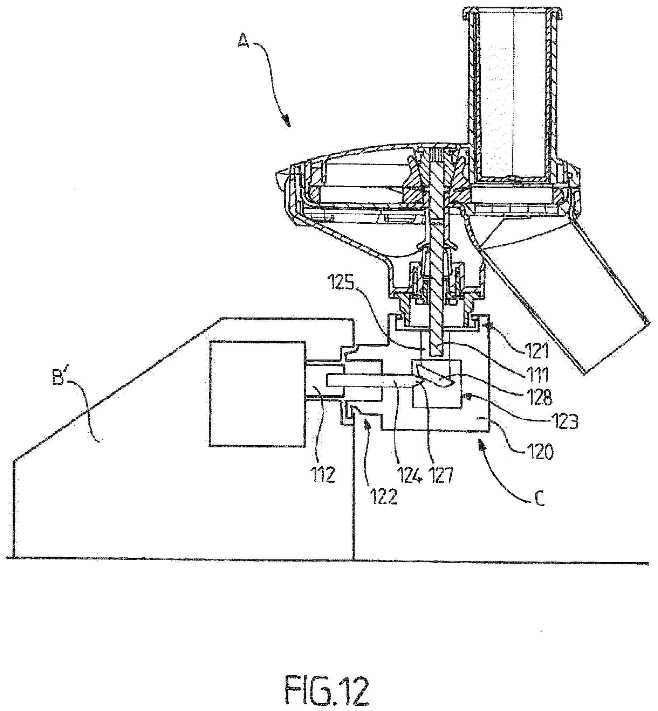

Selon l'exemple illustré à la figure 1, le boîtier d'entraînement motorisé B comprend un arbre de sortie 112 vertical. Toutefois, selon l'invention, l'accessoire de découpe d'aliments A peut aussi être utilisé avec un boîtier d'entraînement motorisé B', tel qu'illustré figure 12, dont l'arbre de sortie 112 est horizontal.

A cet effet, l'accessoire de découpe d'aliments A peut être associé à un adaptateur C amovible comprenant des moyens 121 de réception de l'embase 88 et un pied d'adaptation 122 sur le boîtier d'entraînement motorisé B'.

Afin d'assurer la transmission du mouvement de rotation de l'arbre de sortie 112 sensiblement horizontal au pied d'entraînement 111 d'axe de rotation Δ sensiblement vertical, l'adaptateur C comporte un bloc de renvoi d'angle 120 comprenant au moins un train d'engrenage 123 assurant un renvoi d'angle entre un pied de transmission 124 qui coopère avec l'arbre de sortie 112 et une tête de transmission 125 qui coopère avec le pied d'entraînement 111, le pied de transmission 124 ayant un mouvement de rotation sur lui-même coaxial à celui de l'arbre d'entraînement 101 et la tête de transmission 125 ayant un mouvement de rotation sur elle-même coaxial à celui du pied d'entraînement 111.

Le train d'engrenage 123 comprend par exemple deux pignons coniques, l'un 127 lié en rotation au pied de transmission 124, l'autre 128 à la tête de transmission 125.

A titre de variante, l'adaptateur C ne comporte pas nécessairement un bloc de renvoi d'angle 120. L'adaptateur C peut notamment comporter un pied d'adaptation 122 dont la configuration est différente de la configuration de l'embase 88 de l'accessoire de découpe d'aliments A, pour autoriser le montage de l'accessoire de découpe d'aliments A sur d'autres types de boîtiers motorisés.

A titre de variante, l'accessoire de découpe d'aliments A peut comporter au moins un outil de coupe secondaire 3, 4, 5 fixe. Si désiré l'accessoire de découpe d'aliments A peut comporter plusieurs outils de coupe secondaire fixes interchangeables.

A titre de variante, l'accessoire de découpe d'aliments A peut comporter un seul outil de coupe secondaire fixe. L'outil de coupe secondaire n'est alors pas nécessairement amovible par rapport à la platine 1.

A titre de variante, l'accessoire de découpe d'aliments A peut être dépourvu d'outil de coupe secondaire fixe. Le conduit 15 n'est alors pas nécessairement issu du fond 10 de la platine 1.

A titre de variante, les moyens de verrouillage 91 ne sont pas nécessairement du type à baïonnette. Le couvercle 6 peut notamment être assemblé avec le carter 8 par vissage, par au moins une bride ou par au moins un crochet.

A titre de variante, le couvercle 6 n'est pas nécessairement amovible par rapport à la platine 1 et au carter 8. Le couvercle 6 peut notamment être monté pivotant sur la platine 1 ou sur le carter 8.

A titre de variante, la platine 1 n'est pas nécessairement verrouillée avec le couvercle 6 lorsque le carter 8 est verrouillé avec le couvercle 6.

A titre de variante, le carter 8 ne comprend pas nécessairement des moyens de verrouillage 91 coopérant avec le couvercle 6. Le carter 8 peut notamment comprendre des moyens de verrouillage coopérant avec la platine 1, la platine 1 comportant d'autres moyens de verrouillage coopérant avec le couvercle 6. Si désiré, le couvercle 6 peut par exemple être verrouillé avec la platine 1 au moyen des languettes 66 engagées dans les fenêtres de verrouillage 67b.

Selon l'exemple de réalisation décrit précédemment en relation avec les figures 1 à 12, l'accessoire de découpe d'aliments A comprend un carter 8. Toutefois, la mise en oeuvre d'un tel carter 8 n'est pas nécessaire à la réalisation d'un accessoire de découpe d'aliments A conforme à l'invention.

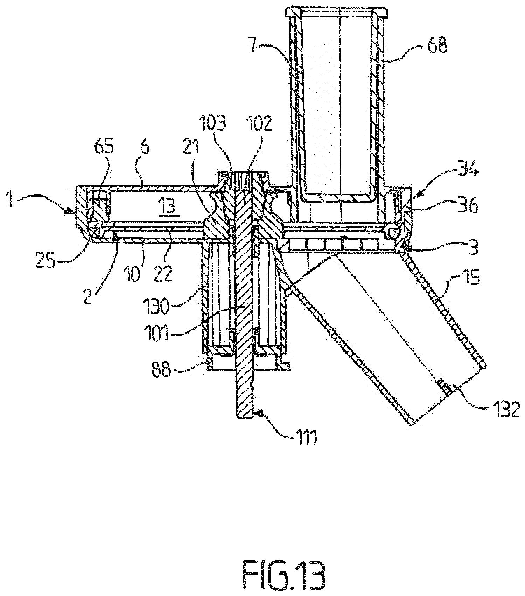

Ainsi, la figure 13 illustre une autre forme de réalisation selon laquelle il n'est pas mis en oeuvre de carter. La platine 1 comprend alors un tronc 130 qui porte l'embase 88. Le couvercle 6 est verrouillé sur la platine 1. Par ailleurs, selon cette forme de réalisation, l'arbre d'entraînement 101 intègre à la fois la tête d'entraînement 102 et le pied d'entraînement 111 et s'étend depuis le dessous de l'embase 88 jusqu'à l'intérieur de la chambre de travail 13.

Par ailleurs, selon cet exemple de réalisation le conduit 15 comprend, à proximité de son extrémité libre 16, au moins une barre d'arrêt 132 s'étendant en travers de sa section de passage. La barre d'arrêt 132 fait ainsi obstacle au passage d'une main par le conduit 15.

Bien entendu diverses autres modifications peuvent être apportées à l'accessoire de découpe d'aliments selon l'invention dans le cadre des revendications annexées.

## Revendications

1. Accessoire de découpe d'aliments (A) destiné à être adapté sur un boîtier d'entraînement motorisé (B) et/ou sur un adaptateur (C), l'accessoire de découpe d'aliments (A) comprenant :
- une platine (1) qui comprend un fond (10) pourvu d'un siège de réception (11) d'un outil de coupe primaire (2) mobile en rotation selon un axe de rotation (Δ), la platine (1) délimitant en partie une chambre de travail (13) ouverte à l'opposé du fond (10), la platine (1) comprenant un conduit (15) d'évacuation des aliments découpés s'étendant à l'extérieur de la chambre de travail (13),
- un couvercle (6) adapté pour fermer en partie au moins la chambre de travail (13), le couvercle (6) comprenant une goulotte (68) d'introduction des aliments à découper,
- une embase (88) d'adaptation sur le boîtier d'entraînement motorisé (B) et/ou sur l'adaptateur (C),
- des moyens d'entraînement (100) en rotation de l'outil de coupe primaire (2) qui comprennent :
- au niveau de l'embase (88), un pied d'entraînement (111) adapté pour coopérer avec un arbre de sortie (112) du boîtier d'entraînement motorisé (B) et/ou avec une tête de transmission (125) de l'adaptateur (C),
- une tête d'entraînement (102) liée en rotation au pied d'entraînement (111) et accessible à partir de la chambre de travail (13),
**caractérisé en ce que** les moyens d'entraînement (100) en rotation de l'outil de coupe primaire (2) comprennent une douille d'entraînement (103) portée par le couvercle (6) et adaptée pour lier en rotation la tête d'entraînement (102) et l'outil de coupe primaire (2).

2. Accessoire de découpe d'aliments (A) selon la revendication 1, **caractérisé en ce que** :
- le fond (10) de la platine (1) est pourvu d'une fenêtre de coupe (14),
- la goulotte (68) d'introduction des aliments à découper est située sensiblement en regard de la fenêtre de coupe (14),
- le conduit (15) d'évacuation des aliments découpés est raccordé à la fenêtre de coupe (14),
- un outil de coupe secondaire (3 ; 4 ; 5) fixe est disposé dans la fenêtre de coupe (14),
- l'outil de coupe secondaire (3 ; 4 ; 5) comprend au moins un organe de coupe (40) qui est situé en regard de la goulotte (68) et qui possède au moins une arrête de coupe (41) orientée vers la goulotte (68),
- et l'outil de coupe primaire (2) rotatif comprend au moins :
- une arrête de coupe principale (23) qui est située dans un plan de coupe (P) sensiblement perpendiculaire à l'axe de rotation (Δ),
- et un biseau presseur (24) qui est issu de l'arrête de coupe principale (23), qui est agencé du côté de l'outil de coupe secondaire (3 ; 4 ; 5), et qui est incliné à partir de l'arrête de coupe principale (23) dans une direction opposée au sens de rotation de l'outil de coupe primaire (2), de manière à presser les aliments tranchés contre l'outil de coupe secondaire (3 ; 4 ; 5).

3. Accessoire de découpe d'aliments (A) selon la revendication 2, **caractérisé en ce que** l'outil de coupe secondaire (3 ; 4 ; 5) est monté amovible dans la fenêtre de coupe (14).

4. Accessoire de découpe d'aliments (A) selon l'une des revendications 2 ou 3, **caractérisé en ce que** l'outil de coupe secondaire (3 ; 4 ; 5) comprend au moins une première série d'organes de coupe (40) sensiblement parallèles entre eux.

5. Accessoire de découpe d'aliments (A) selon la revendication 4, **caractérisé en ce que** l'outil de coupe secondaire (4 ; 5) comprend une deuxième série d'organes de coupe (45) sensiblement parallèles entre eux, la deuxième série d'organes de coupe (45) définissant, avec la première série d'organes de coupe (40), une grille de découpe.

6. Accessoire de découpe d'aliments (A) selon l'une des revendications 1 à 5, **caractérisé en ce que** le couvercle (6) est mobile sur la platine (1) entre une position déverrouillée dans laquelle le couvercle (6) peut être retiré de la platine (1) et une position verrouillée.

7. Accessoire de découpe d'aliments (A) selon l'une des revendications 1 à 6, **caractérisé en ce qu'**il comprend un carter (8) qui est situé sous la platine (1), et qui porte l'embase (88) et comporte une tête d'accouplement (113) liée en rotation avec le pied d'entraînement (111), la tête d'accouplement (113) coopérant avec un pied d'accouplement (114) porté par l'arbre d'entraînement (101) lorsque la platine (1) est montée sur le carter (8).

8. Accessoire de découpe d'aliments (A) selon la revendication 7, **caractérisé en ce que** le carter (8) comprend des moyens de verrouillage (91) qui coopèrent avec le couvercle (6) en position verrouillée pour lier le couvercle (6) au carter (8).

9. Accessoire de découpe d'aliments (A) selon la revendication 8, **caractérisé en ce que** les moyens de verrouillage (91) sont du type à baïonnette.

10. Accessoire de découpe d'aliments (A) selon l'une des revendications 1 à 9, **caractérisé en ce que** le conduit (15) s'étend selon un axe longitudinal (D) qui forme un angle aigu (α) non nul avec l'axe de rotation (Δ).

11. Accessoire de découpe d'aliments (A) selon la revendication 10, **caractérisé en ce que** l'angle aigu (α) présente une valeur comprise entre 20° et 50°.

12. Accessoire de découpe d'aliments (A) selon l'une des revendications 1 à 11, **caractérisé en ce que** le conduit (15) présente une extrémité libre (16) distante d'une longueur (l) supérieure ou égale à 100 mm à partir de la fenêtre de coupe (14).

13. Accessoire de découpe d'aliments (A) selon l'une des revendications 1 à 12, **caractérisé en ce que** le conduit (15) possède une section dont la moyenne des dimensions maximale et minimale est au plus égale à 65,5 mm, et/ou dont la dimension maximale est au plus égale à 76 mm.

14. Accessoire de découpe d'aliments (A) selon l'une des revendications 1 à 13, **caractérisé en ce que** le conduit (16) possède une section décroissante depuis la fenêtre de coupe (14) jusqu'à son extrémité libre (16).

15. Accessoire de découpe d'aliments (A) selon l'une des revendications 1 à 14, **caractérisé en ce que** la goulotte (68) s'étend selon une direction longitudinale (D') sensiblement parallèle à l'axe de rotation (Δ).

16. Ensemble de découpe d'aliments, comportant un accessoire de découpe d'aliments (A) selon l'une des revendications 1 à 15 et un adaptateur (C) amovible comprenant :
- d'une part, des moyens (121) de réception de l'embase (88) et un pied d'adaptation (122) sur un boîtier d'entraînement motorisé (B'),
- et, d'autre part, une tête de transmission (125) adaptée pour coopérer avec le pied d'entraînement (111) de l'embase (88) et un pied de transmission (124) adapté pour coopérer avec l'arbre de sortie (112) du boîtier d'entraînement motorisé (B'), la tête de transmission (125) étant entraînée par le pied de transmission (124).

17. Ensemble de découpe d'aliments selon la revendication 16, **caractérisé en ce que** l'adaptateur (C) comprend un bloc de renvoi d'angle (120) comprenant au moins un train d'engrenage (123) assurant un renvoi d'angle entre la tête de transmission (125) et le pied de transmission (124).

18. Appareil électroménager de préparation culinaire, comportant un boîtier d'entraînement motorisé (B, B'), si désiré un adaptateur (C) amovible monté sur le boîtier d'entraînement motorisé (B'), et un accessoire de découpe d'aliments (A) amovible monté sur le boîtier d'entraînement motorisé (B) et/ou sur l'adaptateur (C), **caractérisé en ce que** l'accessoire de découpe d'aliments (A) est conforme à l'une des revendications 1 à 15.

## Patentansprüche

1. Zubehörteil zum Schneiden von Lebensmitteln (A), das dazu bestimmt ist, an eine motorisierte Antriebsbox (B) und / oder einen Adapter (C) angebracht zu werden, wobei das Zubehörteil zum Schneiden von Lebensmitteln (A) umfasst:
- eine Platte (1), die einen Boden (10) umfasst, der mit einem Sitz zur Aufnahme (11) eines primären Schneidwerkzeugs (2) versehen ist, das um eine Drehachse (Δ) drehbar ist, wobei die Platte (1) teilweise eine Arbeitskammer (13) begrenzt, die gegenüber dem Boden (10) offen ist, wobei die Platte (1) eine Leitung (15) zur Abführung von geschnittenen Lebensmitteln umfasst, die sich nach außerhalb von der Arbeitskammer (13) erstreckt,
- einen Deckel (6), der angebracht ist, um die Arbeitskammer (13) zumindest teilweise zu verschließen, wobei der Deckel (6) eine Rutsche (68) zum Einführen von zu schneidendem Lebensmittel umfasst,
- eine Basis (88) zur Anbringung auf die motorisierte Antriebsbox (B) und / oder den Adapter (C),
- Antriebsmittel (100) zum Drehen des primären Schneidwerkzeugs (2), die umfassen:
- bei der Basis (88) einen Antriebsfuß (111), der angebracht ist, um mit einer Ausgangswelle (112) der motorisierten Antriebsbox (B) und / oder mit einem Übertragungskopf (125) des Adapters (C) zusammenzuwirken,
- einen Antriebskopf (102), der drehbar mit dem Antriebsfuß (111) verbunden ist und von der Arbeitskammer (13) aus zugänglich ist,
**dadurch gekennzeichnet, dass** die Antriebsmittel (100) zum Drehen des primären Schneidwerkzeugs (2) eine Antriebsbuchse (103) umfassen, die von dem Deckel (6) getragen wird und angebracht ist, um den Antriebskopf (102) und das primäre Schneidwerkzeug (2) drehbar zu verbinden.

2. Zubehörteil zum Schneiden von Lebensmitteln (A) nach Anspruch 1, **dadurch gekennzeichnet, dass**:
- der Boden (10) der Platte (1) mit einem Schneidfenster (14) versehen ist,
- die Rutsche (68) zum Einführen der zu schneidenden Lebensmittel sich im Wesentlichen gegenüber dem Schneidfenster (14) befindet,
- die Leitung (15) zur Abführung der geschnittenen Lebensmittel mit dem Schneidfenster (14) verbunden ist,
- ein sekundäres feststehendes Schneidwerkzeug (3; 4; 5) in dem Schneidfenster (14) angeordnet ist,
- das sekundäre Schneidwerkzeug (3; 4; 5) mindestens ein Schneidelement (40) umfasst, das sich der Rutsche (68) gegenüberliegend befindet und die mindestens eine Schneidkante (41) besitzt, die der Rutsche (68) zugewandt ist,
- und das drehbare Schneidwerkzeug (2) umfasst mindestens:
- eine Hauptschneidkante (23), die sich in einer Schnittebene (P) im Wesentlichen senkrecht zu der Drehachse (Δ) befindet,
- und einen Druckkeil (24), der von der Hauptschneidkante (23) ausgeht, der seitlich von dem sekundären Schneidwerkzeug (3; 4; 5) angeordnet ist und der zu der Hauptschneidkante (23) entgegen der Drehrichtung des primären Schneidwerkzeugs (2) geneigt ist, um das geschnittene Lebensmittel gegen das sekundäre Schneidwerkzeug (3; 4; 5) zu drücken.

3. Zubehörteil zum Schneiden von Lebensmitteln (A) nach Anspruch 2, **dadurch gekennzeichnet, dass** das sekundäre Schneidwerkzeug (3; 4; 5) entnehmbar in dem Schneidfenster (14) montiert ist.

4. Zubehörteil zum Schneiden von Lebensmitteln (A) nach einem der Ansprüche 2 oder 3, **dadurch gekennzeichnet, dass** das sekundäre Schneidwerkzeug (3; 4; 5) mindestens eine erste Reihe von Schneidelementen (40) umfasst, die im Wesentlichen parallel zueinander sind.

5. Zubehörteil zum Schneiden von Lebensmitteln (A) nach Anspruch 4, **dadurch gekennzeichnet, dass** das sekundäre Schneidwerkzeug (4; 5) eine zweite Reihe von Schneidelementen (45) umfasst, die im Wesentlichen parallel zueinander sind, wobei die zweite Reihe von Schneidelementen (45) mit der ersten Reihe von Schneidelementen (40) einen Schneidrost definiert.

6. Zubehörteil zum Schneiden von Lebensmitteln (A) nach einem der Ansprüche 1 bis 5, **dadurch gekennzeichnet, dass** der Deckel (6) auf der Platte (1) zwischen einer entriegelten Position, in der der Deckel (6) von der Platte (1) entfernt werden kann, und einer verriegelten Position bewegbar ist.

7. Zubehörteil zum Schneiden von Lebensmitteln (A) nach einem der Ansprüche 1 bis 6, **dadurch gekennzeichnet, dass** es ein Gehäuse (8) umfasst, das sich unter der Platte (1) befindet und das die Basis (88) trägt, und einen Kupplungskopf (113) aufweist, der drehbar mit dem Antriebsfuß (111) verbunden ist, wobei der Kupplungskopf (113) mit einem Kupplungsfuß (114) zusammenwirkt, der von der Antriebswelle (101)getragen wird, wenn die Platte (1) an dem Gehäuse (8) montiert ist.

8. Zubehörteil zum Schneiden von Lebensmitteln (A) nach Anspruch 7, **dadurch gekennzeichnet, dass** das Gehäuse (8) Verriegelungsmittel (91) umfasst, die mit dem Deckel (6) in der verriegelten Position zusammenwirken, um den Deckel (6) mit dem Gehäuse (8) zu verbinden.

9. Zubehörteil zum Schneiden von Lebensmitteln (A) nach Anspruch 8, **dadurch gekennzeichnet, dass** die Verriegelungsmittel (91) vom Bajonetttyp sind.

10. Zubehörteil zum Schneiden von Lebensmitteln (A) nach einem der Ansprüche 1 bis 9, **dadurch gekennzeichnet, dass** die Leitung (15) sich entlang einer Längsachse (D) erstreckt, die einen spitzen Winkel (α) bildet, der mit der Drehachse (Δ) nicht null ist.

11. Zubehörteil zum Schneiden von Lebensmitteln (A) nach Anspruch 10, **dadurch gekennzeichnet, dass** der spitze Winkel (α) einen Wert zwischen 20° und 50° aufweist.

12. Zubehörteil zum Schneiden von Lebensmitteln (A) nach einem der Ansprüche 1 bis 11, **dadurch gekennzeichnet, dass** die Leitung (15) ein freies Ende (16) in einem Abstand von einer Länge (l) größer oder gleich 100 mm von dem Schneidfenster (14) aufweist.

13. Zubehörteil zum Schneiden von Lebensmitteln (A) nach einem der Ansprüche 1 bis 12, **dadurch gekennzeichnet, dass** die Leitung (15) einen Querschnitt besitzt, dessen Mittelwert der maximale und minimalen Abmessung höchstens 65,5 mm beträgt und / oder deren maximale Abmessung nicht mehr als 76 mm beträgt.

14. Zubehörteil zum Schneiden von Lebensmitteln (A) nach einem der Ansprüche 1 bis 13, **dadurch gekennzeichnet, dass** die Leitung (16) einen Querschnitt besitzt, der von dem Schneidfenster (14) bis zu seinem freien Ende (16) abnimmt.

15. Zubehörteil zum Schneiden von Lebensmitteln (A) nach einem der Ansprüche 1 bis 14, **dadurch gekennzeichnet, dass** sich die Rutsche (68) in einer Längsrichtung (D') im Wesentlichen parallel zu der Drehachse (Δ) erstreckt.

16. Anordnung zum Schneiden von Lebensmitteln, aufweisend ein Zubehörteil zum Schneiden von Lebensmitteln (A) nach einem der Ansprüche 1 bis 15 und einen abnehmbaren Adapter (C), umfassend:
- einerseits Mittel (121) zur Aufnahme der Basis (88) und einen Fuß zur Anbringung (122) auf einer motorisierten Antriebsbox (B')
- und zum anderen einen Übertragungskopf (125), der angebracht ist, um mit dem Antriebsfuß (111) der Basis (88) zusammenzuwirken, und einen Übertragungsfuß (124), der angebracht ist, um mit der Ausgangswelle (112) der motorisierten Antriebsbox (B') zusammenzuwirken, wobei der Übertragungskopf (125) durch den Übertragungsfuß (124) angetrieben wird.

17. Anordnung zum Schneiden von Lebensmitteln nach Anspruch 16, **dadurch gekennzeichnet, dass** der Adapter (C) einen Eckumlenkungsblock (120) umfasst, der mindestens einen Getriebestrang (123) umfasst, der eine Eckumlenkung zwischen dem Übertragungskopf (125) und dem Übertragungsfuß (124) sicherstellt.

18. Elektrisches Haushaltsgerät zur Lebensmittelzubereitung, aufweisend eine motorisierte Antriebsbox (B, B'), gegebenenfalls einen abnehmbaren Adapter (C), der an der motorisierten Antriebsbox (B') montiert ist, und ein Zubehörteil zum Schneiden von Lebensmitteln (A), das abnehmbar an der motorisierten Antriebsbox (B) und / oder an dem Adapter (C) montiert ist, **dadurch gekennzeichnet, dass** das Zubehörteil zum Schneiden von Lebensmitteln (A) gemäß einem der Ansprüche 1 bis 15 ist.

## Claims

1. Food cutting accessory (A) intended to be adapted on a motorised drive unit (B) and/or on an adapter (C), the food cutting accessory (A) comprising:
- a plate (1) which comprises a bottom (10) provided with a reception seat (11) of a primary cutting tool (2) that can rotate freely about an axis of rotation (Δ), the plate (1) partly defining a working chamber (13) open opposite the bottom (10), the plate (1) comprising a duct (15) for evacuating cut food extending outside the working chamber (13),
- a lid (6) suitable for partly closing at least the working chamber (13), the lid (6) comprising a chute (68) for introducing the food to be cut,
- a base (88) for adaptation on the motorised drive unit (B) and/or on the adapter (C),
- means for driving (100) in rotation the primary cutting tool (2) which comprise:
- on the base (88), a drive foot (111) suitable for cooperating with an output shaft (112) of the motorised drive unit (B) and/or with a transmission head (125) of the adapter (C),
- a drive head (102) linked in rotation to the drive foot (111) and accessible from the working chamber (13),
**characterised in that** the means for driving (100) in rotation of the primary cutting tool (2) comprise a drive bush (103) carried by the lid (6) and suitable for linking in rotation the drive head (102) and the primary cutting tool (2).

2. Food cutting accessory (A) according to claim 1, **characterised in that**:
- the bottom (10) of the plate (1) is provided with a cutting window (14),
- the chute (68) for introducing the food to be cut is located substantially facing the cutting window (14),
- the duct (15) for evacuating cut food is connected to the cutting window (14),
- a fixed secondary cutting tool (3; 4; 5) is arranged in the cutting window (14),
- the secondary cutting tool (3; 4; 5) comprises at least one cutting member (40) which is located facing the chute (68) and which has at least one cutting stop (41) directed towards the chute (68),
- and the rotating primary cutting tool (2) comprises at least:
- one main cutting stop (23) which is located in a cutting plane (P) substantially perpendicular to the axis of rotation Δ),
- and one presser bevel (24) which comes from the main cutting stop (23), which is arranged on the side of the secondary cutting tool (3; 4; 5), and which is inclined from the main cutting stop (23) in a direction opposite to the direction of rotation of the primary cutting tool (2), in such a way as to press the cut food against the secondary cutting tool (3; 4; 5).

3. Food cutting accessory (A) according to claim 2, **characterised in that** the secondary cutting tool (3; 4; 5) is removably mounted in the cutting window (14).

4. Food cutting accessory (A) according to one of claims 2 or 3, **characterised in that** the secondary cutting tool (3; 4; 5) comprises at least one first series of cutting members (40) substantially parallel to each other.

5. Food cutting accessory (A) according to claim 4, **characterised in that** the secondary cutting tool (4; 5) comprises a second series of cutting members (45) substantially parallel to each other, the second series of cutting members (45) defining, with the first series of cutting members (40), a cutting grid.

6. Food cutting accessory (A) according to one of claims 1 to 5, **characterised in that** the lid (6) is mobile on the plate (1) between an unlocked position wherein the lid (6) can be removed from the plate (1) and a locked position.

7. Food cutting accessory (A) according to one of claims 1 to 6, **characterised in that** it comprises a casing (8) which is located under the plate (1), and which carries the base (88) and comprises a coupling head (113) linked in rotation with the drive foot (111), the coupling head (113) cooperating with a coupling foot (114) carried by the drive shaft (101) when the plate (1) is mounted on the casing (8).

8. Food cutting accessory (A) according to claim 7, **characterised in that** the casing (8) comprises locking means (91) that cooperate with the lid (6) in the locked position in order to link the lid (6) to the casing (8).

9. Food cutting accessory (A) according to claim 8, **characterised in that** the locking means (91) are of the bayonet type.

10. Food cutting accessory (A) according to one of claims 1 to 9, **characterised in that** the duct (15) extends along a longitudinal axis (D) which forms a non-zero acute angle (α) with the axis of rotation (Δ).

11. Food cutting accessory (A) according to claim 10, **characterised in that** the acute angle (α) has a value between 20° and 50°.

12. Food cutting accessory (A) according to one of claims 1 to 11, **characterised in that** the duct (15) has a free end (16) distant by a length (l) greater than or equal to 100mm from the cutting window (14).

13. Food cutting accessory (A) according to one of claims 1 to 12, **characterised in that** the duct (15) has a section of which the average of the maximum and minimum dimensions is at most equal to 65.5mm, and/or of which the maximum dimension is at most equal to 76mm.

14. Food cutting accessory (A) according to one of claims 1 to 13, **characterised in that** the duct (16) has a decreasing section from the cutting window (14) to its free end (16).

15. Food cutting accessory (A) according to one of claims 1 to 14, **characterised in that** the chute (68) extends along a longitudinal direction (D') substantially parallel to the axis of rotation (Δ).

16. Food cutting assembly, comprising a food cutting accessory (A) according to one of claims 1 to 15 and a removable adapter (C) comprising:
- on the one hand, means (121) of receiving the base (88) and an adaptation foot (122) on a motorised drive unit (B'),
- and, on the other hand, a transmission head (125) suitable for cooperating with the drive foot (111) of the base (88) and a transmission foot (124) suitable for cooperating with the output shaft (112) of the motorised drive unit (B'), the transmission head (125) being driven by the transmission foot (124).

17. Food cutting assembly according to claim 16, **characterised in that** the adapter (C) comprises an angular gearbox (120) comprising at least one gear train (123) providing a gearbox between the transmission head (125) and the transmission foot (124).

18. Food preparation household electrical appliance, comprising a motorised drive unit (B, B'), if desired a removable adapter (C) mounted on the motorised drive unit (B'), and a removable food cutting accessory (A) mounted on the motorised drive unit (B) and/or on the adapter (C), **characterised in that** the food cutting accessory (A) is according to one of claims 1 to 15.
